# EUROPEAN PATENT APPLICATION

(11) **EP 1 304 684 A2**
(43) Date of publication of application: **23.04.2003**
(21) Application number: 02257011.3
(22) Date of filing: 09.10.2002
(51) Int. Cl.: G11B 7/00

(54) **Optimized data storage system and method for optical storage system**

(30) Priority: 22.10.2001 US 14392
(71) Applicant: Plasmon LMS, Inc., Colorado Springs, CO 80907 (US)
(72) Inventor: Verboom, Johannes J., Colorado Springs, CO 80919 (US)
(74) Representative: Fenlon, Christine Lesley

(57) **Abstract**

The accuracy of a data storage device is improved by incorporating a number of multipurpose reference bytes throughout the data. The reference bytes are used to coordinate the timing and accuracy of data when retrieved from the media. Additionally, the reference bytes provide meaningful error correction information in a manner that is easily implemented. This use of reference bytes supplements many well known error correction methodologies to provide for the accurate retrieval of information to the user. In order to coordinate the use of reference bytes, unique operations are undertaken using a predefined preamble to appropriately set the operating parameters of the storage device. For example, both the preamble and the reference bytes are used to carefully control the most optimum gain and phase control for the data storage device.

## Description

The present invention relates to data storage systems. More specifically, the present invention relates to a system and method for the accurate storage and/or retrieval of data which incorporates periodic multi-purpose reference bytes.

Advances in manufacturing technologies and system architecture have led to increasingly powerful electronic devices and computers. These electronic devices and computers support features and applications, such as multimedia, in which vast amounts of information are processed and stored. Generally, the amount of information is not only vast, but also ever-increasing.

To provide the information needed by today's high powered applications, storage technologies have been developed to meet the high capacity data storage needs created, including magnetic, optical and magnetooptical technologies. Although these technologies provide relatively large storage capabilities, the technologies generally demand ongoing improvement so as to overcome factors limiting storage capacity and performance. The accurate detection or reading of recorded data is one performance characteristic which is a continual concern, particularly with the increasing recording density or capacity of the storage devices.

Since the launch in 1982 of the audio CD, optical disks have become a very popular storage media due to their durability, random access features, and the high capacities that can be achieved on a single removable disk. As mentioned, the computerization of businesses has also steadily increased the amount of data that is processed. As more data is processed, the amount of data which must be stored increases as well. To meet this need for ever-increasing amounts of data, cost-effective and accurate data storage is necessary.

As is well known, data on optical disks is stored by altering the physical properties of the optical media at defined locations. The optical media can be altered either at a factory where storage media is mass-produced or, within the optical drive itself.

For both reading and writing of information, the optical storage device utilizes a laser positioned adjacent the storage media. In the write mode, the laser is used to alter the physical properties of the media at the desired locations. Conversely, in the read mode, the laser is used to illuminate the storage media surface and detect the physical surface property at the desired location. The operation and performance of the storage device is thus very dependent upon the laser the quality of the storage media, and the precise coordination of these actions.

As with all precision devices, exact precision is not always possible and certain imperfections and anomalies exist in the data storage system. For example, imperfections in the storage media surface, can result in inconsistent recording of data. Furthermore, variations in the read-out circuitry can also cause timing and data accuracy problems when reading data. Consequently, several measures are typically incorporated in the storage device to insure accurate operation. For example, servo tracks are included on the storage disk in order to coordinate the timing of read and write operation. Also, initialization or synchronization sections of the media are specifically designed to accommodate those functions - all of which helps to maintain data accuracy and device performance.

Among other operations that must be controlled, the timing of read and write operations must be carefully controlled in order for the data to be meaningful. In optical data storage systems, several factors must be coordinated in order to produce accurate and meaningful data storage. These factors include the speed of the disk, delays in electronics, operational characteristics of the laser, the speed of related systems, etc. Consequently, timing clocks are often coordinated or locked together to provide overall control of data timing in storage systems.

In addition to timing, gains and offsets of the various electronics must also be controlled and coordinated so that information is meaningful. As can be easily appreciated, readout and/or control electronics are ineffective if they have too much gain. Also, undesirable offsets can adversely effect the electronics. Conversely, the readout systems must have sufficient gain to provide the necessary resolution. Inefficiently controlling the settings and operation of these electronics results in insensitivities and the inability to operate properly.

In addition to the concerns that relate to the actual storage media and the control electronics, several schemes have been incorporated to detect data errors in the read data. Generally speaking, these mechanisms are incorporated in an error correction code (ECC) which monitor certain streams of data and detects for errors. ECC coding is well defined and exists in several formats. For example, Reed-Soloman coding has been commonly used to deal with errors. See, Clark, George C., Jr., Cain, J.Bibb, Error-Correction Coding for Digital Communications, Plenum Press 1981. An additional , one specific ECC methodology is set out in a paper by Wim. Coene et al.,"Channel coding and Signal Processing for Optical Recording Systems Beyond DVD", IEEE Transactions on Magnetics, Vol. 37, Issue 2, Part 1, March 2001, pp. 682-688. This ECC schemes involves the storage of data in a virtual matrix which includes various "pickets" that allow for various cross-checking operations to be accomplished. The "pickets" are kept small (relative to the overall matrix) in order to minimize overhead, and contain additional parity bits. These additional parity bits provide further resources for the particular error correction scheme being used. Obviously, this ECC methodology is fairly involved and includes substantial amounts of data processing-often done by a separate ECC processor or system.

An embodiment of the present invention provides a data storage system which comprehensively controls data storage and retrieval operations to provide optimized operations while also minimizing a number of error sources. One aspect of the invention minimizes error sources by having the data stored on a storage media include a number of periodically placed reference bytes integrated with the data itself, in additional to synchronization and timing bytes that are typically included at the beginning of a data sector. By including these periodic reference bytes the system has the ability to continually update and/or adjust its phase control and gain control as needed. Further, the reference bytes easily provide additional error correction information for the data storage system.

In a storage system embodying the present invention, data is stored in a number of sectors, with each sector itself including a predetermined number of data frames. The first frame includes a synchronization or preamble section at the beginning thereof. This preamble allows for the initialization and synchronization of various sub-systems within the data storage system. To compliment this initial synchronization section, each frame includes at least one reference field for the periodic monitoring of various storage system operations. For example, the resync or reference field allows updates for read channel gain control, read channel offset control, phase synchronization, and ECC coding.

As discussed above, it is desirable to have a read-out gain optimized for the particular data storage operation in order to provide efficient data storage and retrieval. In the case of data coded in a 1,7 RLL data coding, this optimization level relates to the amplitude of 2T and 3T marks. Specifically, the read-out gain is optimized so that a 3T mark will fill a majority of the read-out window. This provides optimum resolution to analyze and decipher the smaller amplitude 2T marks. Larger marks however, will saturate the read-out amplifiers and provide a maximum output. The actual amplitude of these marks is unimportant however, as it is clearly over the desired threshold level. When dealing with 2T marks, it is critical to be able to differentiate between these marks and accurately determine or read out the actual data. As will be discussed later, this allows for the efficient operation of ECC coding. Further, this also optimizes the operation various readout systems (see e.g., U.S. Patent 6,205,103 entitled "Advanced Adaptive and Selective ISI Cancellation for a Read Channel in Storage Technology", assigned to the assignee of the present invention, and incorporated herein by reference).

The initial optimization of the read-out gain is accomplished by using predefined data patterns within the initial synchronization fields. This will provide the most efficient operation of the readout, and most optimum retrieval of data. The present invention further monitors and adjusts this gain level by utilizing defined patterns stored in the reference bytes, included in each data sector. Consequently, the gain will continuously be optimized throughout read operations.

In addition to the gain control achieved by an embodiment of the present invention, fine phase synchronization control is also easily achieved and appropriately updated. In the data storage system of the present invention, a known data pattern utilized to initially provide fine phase synchronization between the read channel and the data channel. More specifically, a phase locked loop (PLL) is utilized to lock the frequency of the read clock to the frequency of the write clock, which can also be adjusted to synchronize the phase. The write clock is created by a clock reference that exists on the media, and thus is locked to the speed thereof. The PLL is thus easily capable of locking the frequencies of these two clock signals to one another, however does not necessarily account for specific phase errors that may exist due to electronic delays or other system conditions. In order to achieve a more precise phase synchronization, a controlled offset can be introduced to the PLL, causing an appropriate phase shift in its output.

In order to appropriately generate the controlled offset necessary to closely synchronize phase, shoulder measurements are made based on a known data pattern which exists in both the initial synchronization bytes, and the defined data pattern in the reference bytes. More specifically, the amplitude of the read-out signal is measured on either side of the anticipated peak center point. Due to the symmetrical nature of the readout signal, this can be used to appropriately synchronize the phase. If the amplitudes at these shoulder points are equal, this indicates that the phase is appropriately matched and no further adjustment is necessary. However, if the amplitude at these shoulder points is unequal, this identifies a phase error in the readout. In order to correct for this phase error, a controlled offset is introduced into the PLL to cause appropriate phase adjustments in the read clock.

As mentioned above, the controlled offset is created based upon the magnitude and polarity of the shoulder point amplitude difference. This amplitude difference will also indicate to the system which direction to adjust the phase. Following the initial introduction of this controlled offset, the system can then reassess the phase relationship based upon new shoulder measurements, and make additional adjustments where necessary.

The initial phase adjustment is made during reading of the initial synchronization bytes in each data sector. The reference bytes can then allow for further periodic adjustments or updates if necessary. It is anticipated that these adjustments would be relatively small, and thus more easily accomplished using smaller amounts of data contained in the reference bytes. One method of achieving the controlled offset is through the use of a programmable delay in the read channel. In this embodiment, the read signal and write clock are compared to determine the amount of phase delay necessary. This comparison can again make use of the shoulder measurements as mentioned above. Based on this comparison, a control signal can be sent back to the programmable delay, which will result in a different phase relationship at the output.

In an alternative embodiment, an offset is injected into the PLL which is synchronizing the read frequency. This offset is obtained using the concepts mentioned above.

In addition to the phase synchronization and gain control features obtained by the periodic placement of reference bytes, this data storage scheme also allows for significant advantages in ECC methodologies. As previously mentioned, each reference bite includes a defined data pattern which is periodically placed in the data field. During read-out, the data from the reference byte can be analyzed to insure the expected signal is being retrieved. The data signal retrieved from the reference byte can be analyzed for both amplitude and shape. Based on this analysis, a reference status byte can easily be created which quickly and simply indicates whether the read-out system is accurately reading the data. In one embodiment, the reference status byte includes a single bit to indicate the shape status (e.g., expected shape v. unexpected shape), a single bit to indicate the amplitude status (e.g., expected amplitude v. unexpected amplitude), and the remaining bits to indicate amplitude value. Consequently, meaningful information will be produced throughout its read process, indicating the operational status of the read-out system.

Based on reference status bytes, appropriate adjustments can possibly be made during reading operations. Additionally, errors in the data can be identified and can be extrapolated based upon the information in the reference status byte. For example, if one bad reference status byte is generated, between two good status bytes, numerous read errors likely exists in that area. Various techniques can then be used to correct for these errors.

In addition, this reference status byte can then be used in conjunction to other ECC methodologies to further enhance the accuracy of data read from the storage system. For example, data correction systems which organize data in a matrix format and perform more involved data correction operations can utilize the data format described above, however must simply account for the presence of periodic reference bytes. This is easily accomplished by the appropriate configuration of ECC code words. For example, by arranging the matrix such that each reference byte is aligned in a particular column, and parity bytes are provided along the bottom rows, Reed-Solomon coding can be used to provide appropriate correction in anticipation of both burst errors and random byte errors.

In one embodiment of the above-mentioned matrix, these reference bytes will exist throughout the entire matrix. Specifically, the reference bytes extend completely therethrough so each row has a defined number of reference bytes therein. While this provides additional overhead to the readout system, it allows the multiple functions as described above. Consequently, this additional use of overhead is an acceptable tradeoff.

Additionally, conditional error extrapolation can be performed when the reference byte indicates errors in adjacent data. For example, if a reference byte for a particular sector indicates a defect, it is highly likely that a certain number of bytes prior to the reference byte and a certain number of bytes following the reference byte all will contain errors. Consequently, these designated bytes should be erased and appropriately corrected. However, it is likely not necessary to replace an entire frame, unless the reference bytes on either side thereof indicate errors. In this manner, a more effective method of error correction can be achieved.

In one embodiment the ECC-erasures will be used when two or more consecutive bad reference bytes are found. The system will flag all the data bytes between the bad reference bytes as erasures. As a further improvement more erasures may be flagged on either end of this error-burst, depending on the reference byte status on either end.

A further benefit to using the reference fields in connection with error correction is the speed at which operation scan be done. The creation of a reference status byte (i.e. shape and amplitude checking) could be placed directly within the read channel of a data storage system because the reference byte waveform is well defined. Thus, meaningful information is quickly and easily created. As mentioned above, this could then be passed along to a more comprehensive error correction processor.

It is desirable to provide an easy and efficient method of error correction which utilizes periodic reference bytes. This error correction mechanism quickly and easily provides meaningful information throughout the data retrieval process. Additionally, conventional error correction schemes can be easily adopted to further enhance the error correcting capabilities of the system.

It is also desirable to provide efficient data storage and retrieval by utilizing period reference bytes to update and optimize several operating characteristics of the storage system. For example, the reference bytes can be used to periodically optimize the read signal gains, read signal offset, phase and frequency synchronization, etc.

It is also desirable to provide optimized initialization of readout or read signal gains to maximize the efficiency ofthe storage system. Further, this gain optimization can be updated periodically throughout the reading operations by examining reference bytes that are periodically encountered.

Further, it is desirable to provide optimum phase synchronization for the readout system. This phase synchronization includes both coarse and fine phase adjustments in order to insure optimum phase locks. Further, this phase lock can easily be updated by utilizing periodic reference bytes.

For a better understanding of the present invention, and to show how the same may be carried into effect, reference will now be made, by way of example, to the accompanying drawings, in which:-
Figure 1 is a block diagram of an exemplary data storage system.
Figure 2 is a graphical illustration of the data storage configuration used in an embodiment of the present invention;
Figure 3 is an illustration showing one example of a reference byte, and the resulting read-out signal produced by the read-out of an embodiment of the present invention;
Figure 4 is another example of the read-out signal produced by the reference bytes of an embodiment of the present invention;
Figure 5 is a more detailed illustration showing another version of the data storage structure of an embodiment of the present invention;
Figure 6 is a illustration showing the structure of the information as transferred to the controller within the storage system embodying the present invention;
Figure 7 is a block diagram showing a read signal digitizer which has appropriate gain and offset control functions;
Figure 8 is a graphical illustration of the readout signal indicating appropriate gain control settings;
Figure 9 is a block diagram showing one method of fine phase synchronization;
Figure 10 is a block diagram showing a second phase synchronization system; and
Figure 11 is a graphical illustration of various signals within the phase synchronization system, with Figure 11A and 11B showing two exemplary phase conditions.

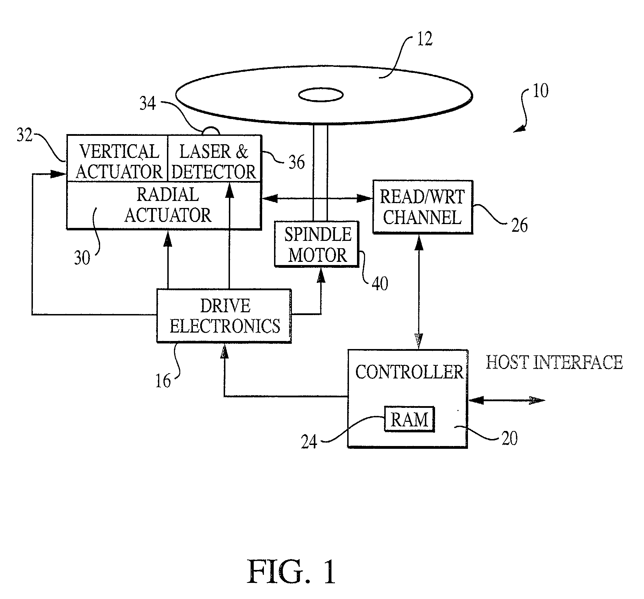

Referring now to Figure 1, there is shown a schematic diagram of an exemplary disk storage system 10. The core component of storage system 10 is a storage media or optical storage device12. Storage media 12 would preferably be an optical disk, however is not necessarily limited to only that type of device. Disk storage system 10, necessarily has a read/write system 14 incorporated therein for writing data to the optical media 12, and reading data therefrom. Storage system 10 further includes drive electronics 16 for operating the functions of the drive. Also associated is a drive controller 20 which includes a memory or RAM 24. Interacting with the output from read/write head 14 is a read/write channel 26 which necessarily includes an internal decoder (now shown). Read/write channel 26 is capable of producing either decoded or nondecoded data and providing this data to controller 20. Controller 20 also communicates with a host system (not shown) to respond to its data storage and retrieval needs.

It will be understood that the system depicted in Figure 1 is simply an example of hardware often found in data storage systems. Many variations could be incorporated into this component hardware and are all contemplated as being part of the present invention. Also, many additional functions may be undertaken by controller 20 or may be controlled by other components (e.g. placed within Read/Write channel 26).

Read/write head 14 includes various components which are necessary for its operation. Specifically, a radial actuator 30 is included for accommodating radial motion for read/write system 14. Also, a vertical actuator 32 is included to move appropriate components closer to the surface of optical media 12 when necessary. Vertical actuator 32 may also be referred to as a focus motor as it typically moves a focusing lens 34 into its optimum position. Lastly, read/write system 14 includes a laser and detector 36 for appropriately producing optical signals for use in either writing or reading to the optical media. Additionally, this laser and detector system cooperates with the light signals produced to detect data which has already been written to optical media 12.

The present invention provides a data storage and retrieval methodology which can insure both initial and continual optimization of several operating parameters. Furthermore, the data storage methodology provides improved error correction mechanisms in a simple and straightforward manner. These error correction mechanisms make efficient use of overhead space, thus similarly providing for efficient data storage. Further, the present invention provides a system for carrying out the storage and retrieval methodology contemplated.

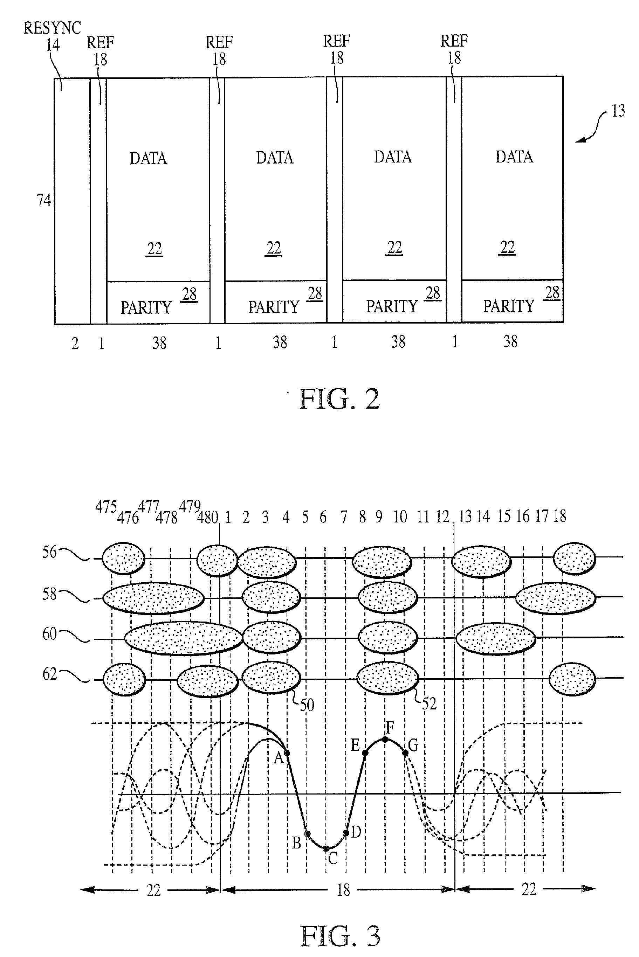

Referring to Figure 2, there is a shown a graphical illustration of the data format utilized in a first embodiment of the invention. As can be seen, the data is stored in a matrix 13 which includes a number of rows and columns. In this embodiment, the matrix includes seventy-four (74) rows and one hundred fiftyeight (158) byte columns. The initial four byte columns are made up of synchronization or resynchronization bytes 14 for each row. Following these synchronization bytes 14 are a plurality of data bytes 22 and reference bytes 18. More specifically, the first sixty-four (64) rows of Matrix 13 will include a sequence of two synchronization bytes, one (1) reference byte, thirty-eight (38) data bytes, one (1) reference byte, thirty-eight (38) data bytes, one (1) reference byte, thirty-eight (38) data bytes, one (1) reference byte, and thirty-eight (38) data bytes. In the last ten (10) rows, parity bytes 28 are substituted for data bytes 22. Stated alternatively, this data matrix 13 includes a plurality of reference bytes 18 making up single columns in the structure. As will be discussed in further detail below, these reference bytes can provide many different functions within a data storage device 100. For example, the structure of data matrix 13 provides for various error correction operations, and specifically the use of Reed-Solomon coding to correct errors in the data.

As can be appreciated, the use of reference bytes extending the entire height of the matrix involves a considerable amount of data storage overhead for internal operations. However, due to the multifunction nature of the reference bytes 18, this additional use of overhead is tolerated as a beneficial tradeoff to the system.

Referring to Figure 3 there is shown one example reference byte 18. In this particular embodiment, reference byte 18 includes a first 3T mark 50 and a second 3T mark 52. As can be seen, the content of reference byte 18 is the same for the first data track 56, second data track 58, third data track 60, and fourth data track 62. Show in the lower portion of Figure 3 is the actual readout signal produced when reading these data tracks 56, 58, 60, and 62. During the reading of reference byte 18, all the readout signals become identical. Consequently, when sampling at selected data points, the readout from all data tracks should be identical. As can be seen, data points A, B, C, D, E, F, and G, all should create identical readout values. If unexpected values are obtained, this suggests the presence of an error.

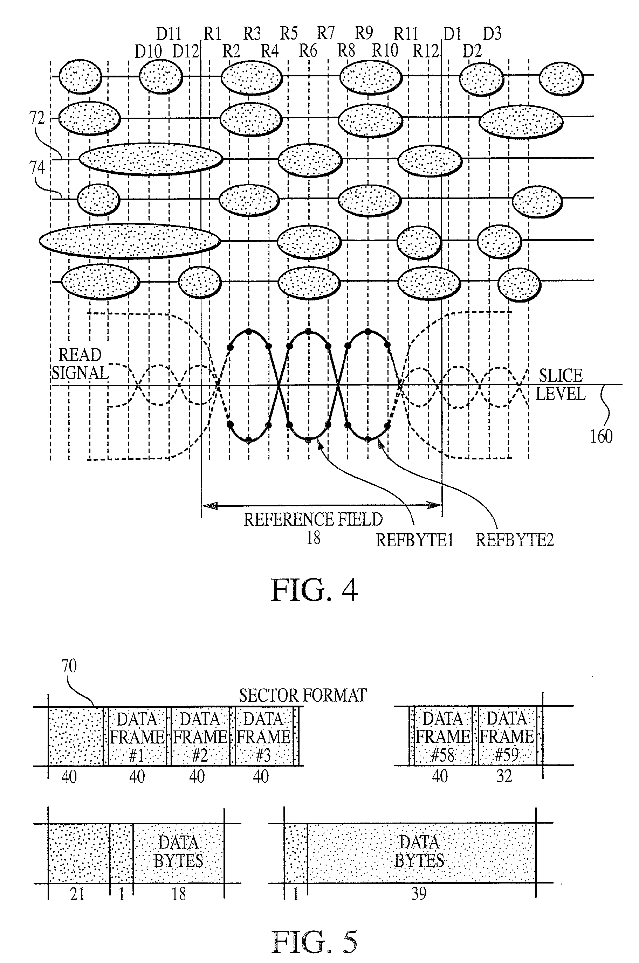

Referring now to Figure 4 which shows a preferred embodiment of the reference field where both 3T spaces and 3T marks are used. In the readout trace shown as Refbyte 1, the 3T marks as discussed above are shown. Alternatively, in the readout trace as Refbyte 2, a pair of 3T spaces are utilized. As can be seen, the various signals should produce identical samples at the various sample points. Consequently, these data points can be analyzed to determine the shape and amplitude obtained when reading out the reference byte 18.

The use of 3T marks verses 3T spaces, as illustrated in Figure 4, will depend upon the other data marks surrounding reference field 18. In summary, a defined data pattern is utilized, which may be selected from a few recognizable alternatives. In the preferred embodiment shown in Figure 4, the defined data pattern will consist of the 3T space pattern shown in data line 72 or the 3T mark pattern shown in data line 74. By limiting the various data patterns to a defined set, the readout and control electronics is capable of easily identifying these patterns.

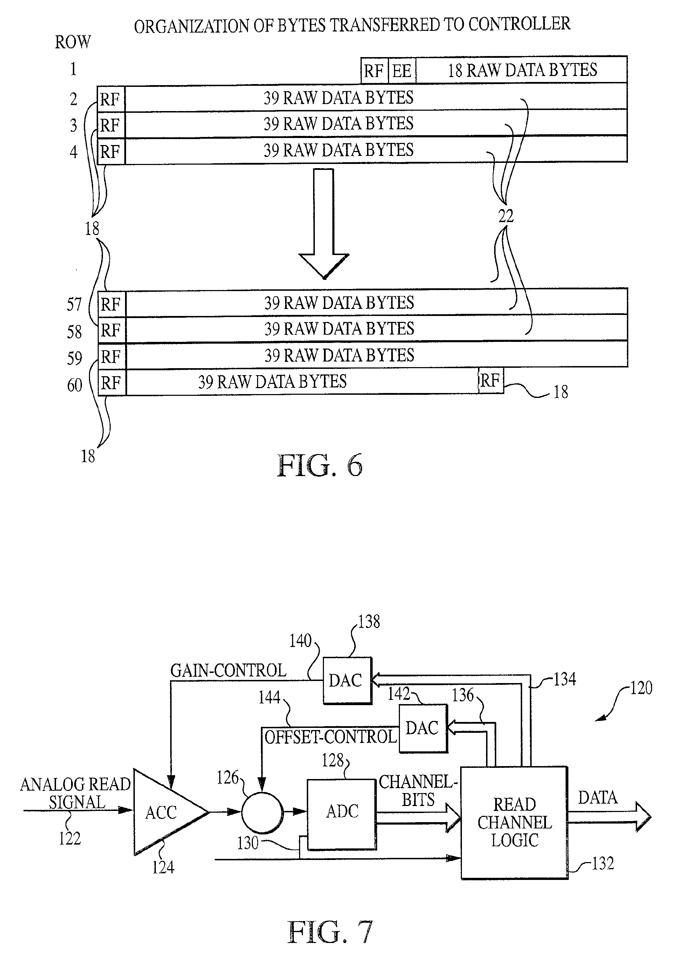

As well known by those skilled in the art, the actual data itself is typically stored in a number of data sectors, with each data sector including a plurality of data frames. Referring to Figure 5, there is graphically illustrated one configuration of an example data sector. In this particular layout, the sector includes sixty different data frames -- data frame #0 through date frame #59. Data frames #0-58 each include 40 bytes, while data frame #59 includes 32 bytes. In this particular layout, data frame #0 includes twenty-one 3T preamble bytes, followed by one 2T preamble byte. These 3T and 2T bytes are utilized for synchronization and initialization functions. Following these bytes, data frame #0 includes eighteen data bytes. Data frame #1 through data frame #58 are all identically formatted, and include one reference byte followed by thirty-nine data bytes. Lastly, data frame #59 includes a first reference byte, thirty data bytes, ending with a single reference byte. In this particular embodiment, the transfer of the various bytes to the controller is shown in Figure 6. As can be seen, a matrix is created in which a column of reference bytes exist as the starting point. Based on this data transfer structure, the raw data bytes can be interleaved over various code words to promote further error correction. This provides an easy and convenient structure for further error correction operations.

Referring back to Figure 4, the use of two different types reference bytes (Refbyte 1 and Refbyte 2) will often depend upon the data structure mmediately preceding the reference byte. Comparing Figure 4 with Figure 3 illustrates how, in certain situations, the use of the 3T space reference byte will be more advantageous and provide more resolution when reading out the reference byte. As long as the reference bytes are selected from a defined group of possible data patterns, the processing circuitry can easily identify the particular reference byte present, and then perform its shape/amplitude evaluation accordingly.

As discussed above, the initial portions of a data sector typically include various initialization and synchronization bytes. These synchronization bytes allow the readout system to calibrate and self adjust in order to operate efficiently. One aspect of this synchronization is appropriate gain control of the read channel. Specifically, appropriate gain control is necessary for the read signal digitizer. As mentioned above, data storage 10 includes a read/write channel 26 for performing data handling operations. Read/write channel 26 includes a read signal digitizer for appropriate conversion of read out signals. As can be seen in Figure 7, an analog readout signal 122 is received at an input to an adjustable amplifier 124. Amplifier 124 provides the necessary gain for read signal digitizer 120 and is precisely the component which must be controlled to provide optimal operation. The output of amplifier 124 is provided to a summing circuit 126, which cooperates to provide the necessary offset control. The output of summing circuit 126 is provided to an analog to digital converter 128 which provides the actual data conversion for read signal digitizer 120. Obviously, analog to digital converter 128 also receives a read clock signal 130 to appropriately control its timing. The output from analog to digital converter 128 is then provided to read channel logic 132 for appropriate analysis and control. Read channel logic 132 also receives the read clock signal 130 at a timing input.

During initialization, read channel logic 132 analyzes the actual readout signal to determine if further adjustments are necessary for either offset control or gain control. Read channel logic 132 has a gain control output 134 and a offset control output 136 to provide necessary adjustments to read signal digitizer 120. Gain control output 134 is then provided to a first digital to analog converter 138 which produces an analog signal proportional to the digital gain control signal. This analog gain control signal 140 is then provided to a control input of adjustable gain amplifier 124. This completes the control loop for the analog gain control and provides the ability to optimize the gain settings of the read signal digitizer.

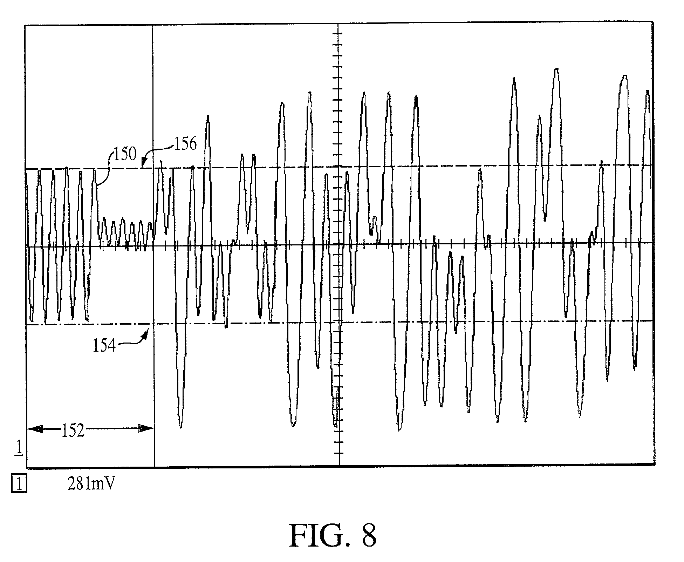

Similarly, offset control output 136 is provided to a second digital to analog converter 142 which produces an analog offset control signal 144. This analog offset control signal 144 is then provided to summing circuit 126 to adjust the offset necessary for proper operation. This completes an offset control loop to provide fast and efficient control of any offset encountered. Referring to Figure 8, the actual control parameters for read signal digitizer 120 are shown in further detail. As can be seen, the analog readout signal 150 is shown in graphical format over time. During an initial portion 152, a known data signal is read from the preamble. In one preferred embodiment, this known preamble signal consists of a number of evenly spaced 3T runs followed by a number of evenly spaced 2T runs. Ideally, the gain of the read signal digitizer is set such that the peak to peak signal amplitude of the 3T runs substantially fills the voltage window of the ADC 128. In Figure 8, the optimized ADC window is illustrated by dotted lines 154, 156. In one embodiment, the gain is set so that the peak to peak 3T signals fill approximately 80% of the readout window. By setting the gain levels of the read signal digitizer at these points, the optimum conditions are also achieved for differentiating the critical 2T marks, thus minimizing quantization noise in the digitized read signal samples.

While the readout graph shown in Figure 8 illustrates the initial synchronization, one skilled in the art will easily appreciate that the reference bytes can easily be used to update and readjust where necessary. Referring back to Figure 4, it can be seen where gain settings 154 and 156 have been placed relative to the readout of Refbyte 1 and Refbyte 2. By setting the gain window slightly above the expected 3T amplitude levels, the read signal digitizer is ptimally configured to analyze the reference bytes and data signals. Obviously, this will result in clipping of signals from the longer runs (4T, 5T, etc.) as these signals will likely be outside the ADC readout window. No meaningful information is lost however because it is only necessary to know whether those signals are above or below the detection threshold, which is typically close to the center of the ADC readout window.

The appropriate adjustment of the ADC readout window is also beneficial for related operations that may be carried out by disk storage system 10. For example, various types of signal conditioning may be incorporated, which will depend upon appropriate gain settings for their operation. One example of such signal conditioning is described in U.S. Patent 6,205,103 entitled "Enhanced Adaptive and Selective ISI Cancellation for a Read Channel in Storage Technologies" which again is incorporated herein by reference. This same optimization would be equally beneficial for other signal processing methodologies. For example, various other signal conditioning methodologies are described in U.S. Patent 6,118,746 entitled "Adaptive and Selective Level Conditioning of a Read Channel in Storage Technologies", U.S. Patent 6,094,408 entitled "Adaptive and Selective Cancellation of Inner Symbol Interference of a Read Channel in Storage Technologies", and U.S. Patent 6,091,687 entitled "Method and Apparatus for Maximum Likelihood Detection", all of which are incorporated herein by reference. Each of these patents illustrate how signal conditioning can be used to provide more optimum data readouts. In each case, the optimum settings for the readout systems are often initialized during the reading of initialization or header information. By having continual periodic reference bytes, interleaved within the data, optimum settings can be similarly updated throughout read operations.

In addition to amplitude considerations, the read signal offset must also be appropriately adjusted. Referring again to Figure 7, the read signal digitizer 120 includes a second digital analog converter 142 which produces analog offset control signal 144. Summing circuit 126 utilizes offset control signal 144 to appropriately adjust the analog offset of the read signal. Referring back to Figure 4, the ideal analog offset is shown. More specifically, the analog offset should ideally be adjusted so that slice level 160 is centered on the read-out signal. Consequently, slice level 160 will accurately indicate when marks or spaces are present in the readout. In addition to the illustration of slice level 160 shown in Figure 4, Figure 8 also illustrates how the desired read-out signal can have its analog offset adjusted to be appropriately aligned. Once again, the optimum offset adjustment is achieved utilizing both initial synchronization patterns present on the storage media, and, the periodically placed reference bytes.

In addition to gain control, the timing of the many components is critical to the effective operation of data storage system 10. Frequency synchronization can be fairly easily and simply accomplished through various frequency locking mechanisms. In many systems, a set of servo marks are provided on the storage media. These servo marks are then used to synchronize a write clock when data is recorded on the disk. This same write clock can be used during reading as it will have an identical frequency. Phase control is somewhat more difficult however, as the read and write systems will often have unknown timing delays within the circuitry. Consequently, data storage system 10 includes a fine phase control circuit to provide precision phase control.

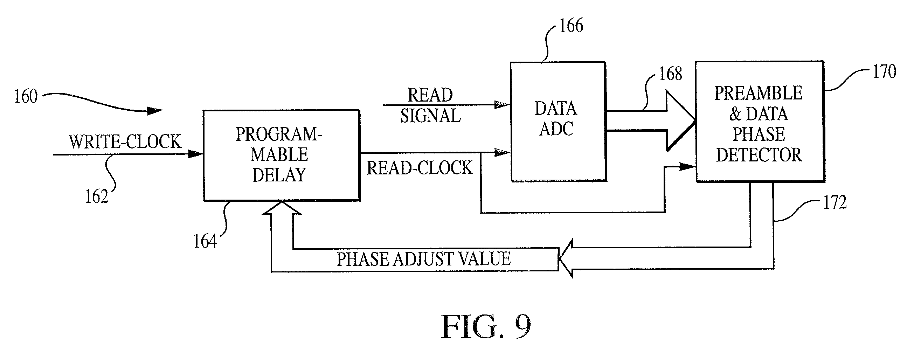

A first embodiment of a phase control system 160 is illustrated in Figure 9. Within phase control system 160 a write clock signal 162 is utilized to perform the necessary fine phase control. Write clock signal 162 is derived from synchronization marks contained on the data media, thus is in close frequency synchronization with the storage media itself. Write clock signal 162 is provided to a programmable delay 164. Because the write clock signal 162 and read clock signal 164 are of the same frequency, only adjustments are necessary for phase inaccuracies. Consequently, by appropriately controlling programmable delay 164, the necessary phase adjustment can be achieved.

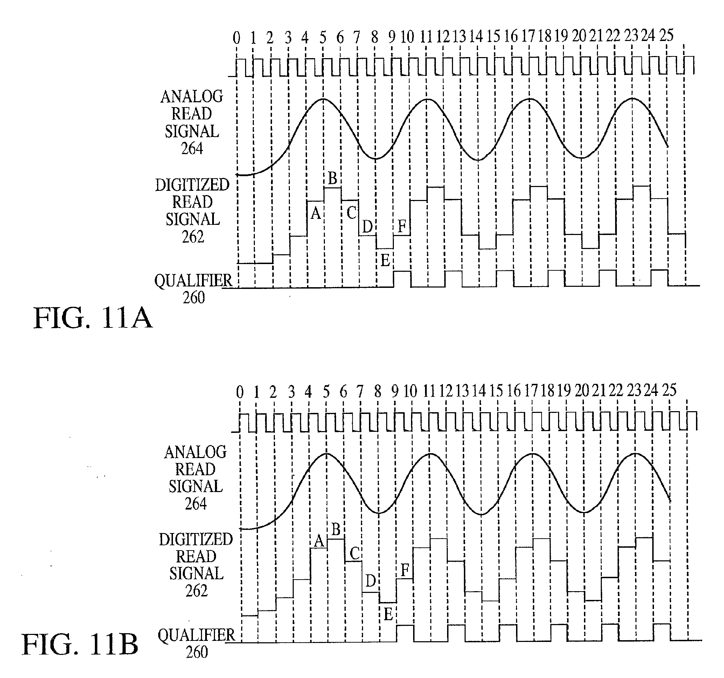

An analog to digital converter 166 is utilized in phase control system 160 to provide a digitized readout signal 168. The digitized readout signal is then provided to a phase detector 170 which is capable of determining whether or not the phase of the read clock is accurately synchronized. Phase detector 170 then provides an output 172 which is connected to programmable delay 164. Phase detector output 172 will cause appropriate adjustments in the programmable delay 164 in order to appropriately adjust the phase synchronization of the read clock. The specific operation of the phase detector 170, is outlined below in relation to Figure 11.

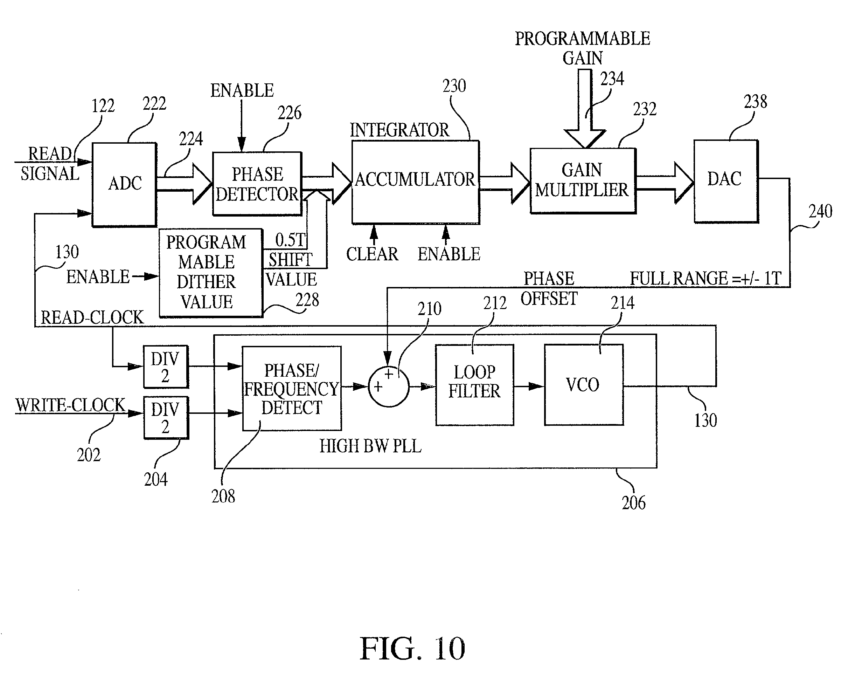

Referring now to Figure 10, a second version of a phase control system 200 is shown in block diagram format. Again, the write clock signal is locked to the servo clock, and is consequently linked to the frequency of the disk drive. Phase control system 200 receives the write clock signal at an input 202. Write clock signal is then divided using divider 204. The output from divider 204 is input to a high bandwidth phase lock loop 206. Using well-known operations, the phase lock loop 206 includes a phase detector 208, a summing circuit 210, a filter 212, and a voltage controlled oscillator 214. The output from voltage controlled oscillator 214 is a synchronized read clock signal 130 which is fed back to a second divider 216. Divider 216 outputs a signal to phase detect circuit 208 in order to lock the frequency of these signals together.

Read clock signal 130 is provided to analog to digital converter 222 in order to create a digitized read signal 224. The analog read signal 122 is also input to the A/D converter 222 so that phase synchronization can be achieved.

Once again, a phase detector 226 is utilized to analyze the existing phase condition. Alternatively, a programmable dither value 228 can be utilized to invoke appropriate phase adjustments. The output of either phase detector 226 or programmable dither value 228 is then provided to an accumulator 230 which operates as an integrator in this control loop. The output of accumulator 230 is provided to a gain multiplier 232 which may also have a programmable gain input 234 in order to adjust appropriate signal levels. Gain multiplier 232 has its output connected to a phase control digital to analog converter 238 which is utilized to create the phase offset adjustment signal 240. Phase lock loop 206 will then use phase offset adjustment signal 240 in order to adjust the phase of the read clock signal 130. In summary, the phase offset adjustment signal 240 adjusts the phase offset of phase lock loop 206, thus also adjusting the phase of read clock signal 130.

In order for the fine phase control to operate as desired, phase detector 226 must be able to appropriately analyze the read signal. The actual operation of phase detector 226 and the analysis of the read signal is further outlined below.

As can be anticipated, this phase adjustment is primarily carried out during the synchronization portion of the data reading process. However, it can equally be appreciated that periodic adjustments are possible when the resync bytes are encountered. Consequently, the present invention provides continuous phase control throughout its reading operations

Figure 10 illustrates the operation of fine phase control at the start of the preamble. A qualifier 260 is used to first identify the desired waveform. The qualifier 260 goes high if desired conditions are met in the digitized read signal 262. (The analog read signal 264 is also shown in Figure 10A for reference.) More specifically, qualifier 260 goes high if ((A>D and B>E and C>F) OR (A<D and B<E and C<F)) After qualifier 260 sees a sequence of 1001001, a value is loaded into accumulator 230. This value is the last shoulder delta (which in this case is Sample10 - Sample12). This process is repeated several times during the preamble and the following reference bytes, ideally resulting in a shoulder delta value of zero.

In Figure 11A the phase of the read clock is already correct so there will actually be very minor phase-adjustments if any.

In Figure 11B the marks are written slightly early to illustrate the adjustments made by the fine phase control. Due to this early writing, a larger shoulder delta exists, so accumulator 230 gets a higher initial value and quickly changes the read clock phase. If the phase overshoots to the opposite polarity, such that subsequent shoulder deltas are negative, then accumulator 230 is adjusted proportionally. Accumulator 230 could be considered as an integrator in the particular phase-control loop shown in Figure 10. With programmable gain 234 and gain multiplier 232 the loop gain can be adjusted for stable operation.

The use of the qualifier allows the system to react to different situations quite well. For example, if the marks are written exactly one full clock cycle late the qualifier recognizes the pattern anyway and just starts the phase control one clock cycle later.

It is conceivable that the initial phase-shift is such that samples A and D have equal values. In that case the qualifier fails to see the expected pattern and after a predetermined time a dither value 228 should be loaded into the accumulator 230, in order to cause a small phase shift in the read clock. After this phase adjustment the qualifier should be able to recognize the preamble pattern.

In case of media-defects in the first part of the preamble, the initial 1001001 qualifier sequence may be missed too, upon which the dither value for a preset phase offset will also be used. But this may be wrong in this case and may result in failure of the qualifier after the media-defect. To deal with that situation, the accumulator 230 may be reset back to zero half way into the preamble. Read retries with different dither values may also be necessary.

After the preamble, continued phase adjustments may be necessary based on phase information in the reference fields. As discussed above, the reference fields are regularly placed on the media, resulting in accurate and continued periodic phase adjustments. While Figures 11A and 11B illustrate situations where the preamble is being used to phase lock the readout, the same principles apply when using the reference fields.

Those skilled in the art will further appreciate that the present invention may be embodied in other specific forms without departing from the central attributes thereof. In that the foregoing description of the present invention discloses only exemplary embodiments thereof, it is to be understood that other variations are contemplated as being within the scope of the present invention. Accordingly, the present invention is not limited in the particular embodiments which have been described in detail therein.

## Claims

1. A method of storing data on a storage medium and retrieving the stored data which includes the ability to predict readout errors when the stored data is retrieved, comprising:
interleaving the data with a plurality of reference fields, each reference field including a defined data pattern;
storing the interleaved data such that the reference fields are at predetermined locations;
upon demand, retrieving the interleaved data;
analyzing the retrieved interleaved data by testing the retrieved reference field to determine if the retrieved reference field meets a predetermined shape condition and a predetermined amplitude condition; and
determining whether readout errors have been encountered based upon the results of the interleaved data analysis.

2. The method of claim 1 further comprising the production of a reference status byte in response to the analysis step, the reference status byte including an amplitude bit and a shape bit to indicate compliance with the predetermined amplitude condition and the predetermined shape condition, respectively for the analyzed reference field.

3. The method of claim 1 or 2 further comprising the analysis of the reference bytes to perform operating parameter updates for the data storage system.

4. The method of claim 3 wherein the operating parameter updates include adjustments to a readout system in the data storage system so that a read signal offset is optimized.

5. The method of claim 3 wherein the operating parameter updates include adjustments to a readout system in the data storage system so that a read signal gain is optimized.

6. The method of claim 3 wherein the operating parameter updates include adjustments to a synchronization system within the data storage system so that optimum phase synchronization can be achieved between a readout signal and a storage media synchronization signal.

7. The method of claim 5 wherein the read signal gain is optimized by adjusting the readout system to maximize the resolution of the readout window so that the reading of the defined data in the reference field will fill substantially all of the readout window.

8. The method of claim 4 wherein the read signal offset is optimized by adjusting the readout system to maximize the resolution of the readout window so that the reading of the defined data in the reference field will fill substantially all of the readout window.

9. The method of claim 2 further comprising predicting the existence in data retrieval errors in the read data on either side of the reference field based upon the reference status byte.

10. The method of any preceding claim wherein the data is stored on the storage media such that it can be arranged in a virtual matrix to allow for further error correction operations, and wherein the reference fields are arranged as a plurality of columns within the virtual matrix.

11. A method of continuously controlling a plurality of operating perimeters and providing error correction capabilities for a data storage system, the method comprising:
storing data so that it is interleaved with a plurality of reference bytes, each reference byte including a defined data pattern and being placed at a predetermined location within the stored data;
reading the stored data and the interleaved reference bytes, and
based upon the defined data pattern of the reference bytes, adjusting operating parameters as necessary and performing error correction analysis.

12. The method of claim 11 wherein the step of error correction analysis includes analyzing the retrieved interleaved data by analyzing the retrieved reference bytes to determine if the retrieved reference bytes meets a predetermined shape condition and a predetermined amplitude condition; and predicting whether readout errors exist on either side of the reference byte based upon the results of the reference byte analysis.

13. The method of claim 11 or 12 further comprising the production of a reference status byte in response to the analysis of the reference byte, the reference status byte including an amplitude bit and a shape bit to indicate compliance with the predetermined amplitude condition and the predetermined shape condition, respectively.

14. The method of claim 11, 12 or 13 further comprising initializing the data storage device by reading an initialization data pattern and adjusting the readout system to maximize the resolution of the readout window so that the reading of the initialization data pattern will fill substantially all of the readout window.

15. The method of claim 11, 12, 13 or 14 wherein the step of adjusting readout gain involves adjusting a gain window of a readout amplifier so that the readout of the predetermined pattern will fill substantially all of the gain window.

16. The method of claim 12 wherein the operating parameter is the read signal offset.

17. The method of claim 12 wherein the operating parameter is the read signal gain.

18. The method of claim 12 wherein the operating parameter is the phase synchronization of the data storage device read system.

19. The method of claim 12 wherein the operating parameter is the frequency synchronization of the data storage device read system.

20. A method of providing optimum read channel operation in a data storage device, the method comprising:
storing data on a storage media such that periodic reference fields are interleaved within the data, each reference field including a defined pattern; and
using the periodic reference bytes to update a plurality of operating parameters of the read channel and to provide a reference field status byte indicative of possible errors that exist in the data.

21. The method of claim 20 wherein one of the plurality of operating parameter is a read signal gain, wherein the read signal gain is adjusted to an optimum level depending on the results of reading the reference fields.

22. The method of claim 20 wherein one of the plurality of operating parameter is a read signal offset, wherein the read signal offset is adjusted to an optimum level depending on the results of reading the reference fields.

23. The method of claim 20 wherein one of the plurality of operating parameter is a read signal phase synchronization, wherein a read clock signal is adjusted to an optimum level depending on the results of reading the reference fields.

24. The method of any one of claims 20 to 23 wherein the reference field status byte is obtained by comparing the amplitude and shape of a readout from the reference field with an expected readout signal, and the reference field status byte is indicative of whether the readout from the reference field matches the expected readout signal.

25. The method of claim 24 wherein the reference field status byte includes a first bit indicative of whether the amplitude of the readout from the reference field matches the expected readout signal.

26. The method of claim 25 wherein the reference field status byte includes a second bit indicative of whether the shape of the readout from the reference field matches the expected readout signal.

27. The method of any one of claims 20 to 26 further comprising the performance of an error correction methodology, wherein the reference field status byte is utilized by the error correction methodology to provide efficient error correction.

28. The method of claim 26 wherein the reference field status byte includes further bits indicative of the amplitude of the readout from the reference field.

29. The method of claim 21 wherein the read signal gain is adjusted to an optimum level which allows for effective signal conditioning.
